# FASCICULE DE BREVET EUROPEEN

(11) **EP 2 603 887 B1**
(45) Date de publication et mention de la délivrance du brevet: **06.12.2017**
(21) Numéro de dépôt: 11757391.5
(22) Date de dépôt: 10.08.2011
(51) Int. Cl.: G06K 19/077, H01Q 1/22, H01Q 9/26, H01Q 11/08

(54) **PROCÈDE DE FABRICATION D'UNE ANTENNE POUR UN DISPOSITIF ÉLECTRONIQUE D'UN PNEUMATIQUE**
VERFAHREN ZUR HERSTELLUNG EINER ANTENNE FÜR EIN ELEKTRONISCHES BAUTEIL EINES REIFENS
METHOD OF MANUFACTURING AN ANTENNA FOR AN ELECTRONIC DEVICE OF A TYRE

(30) Priorité: 11.08.2010 FR 1056568
(43) Date de publication de la demande: 19.06.2013
(73) Titulaire: Compagnie Générale des Etablissements Michelin, 63000 Clermont-Ferrand (FR)
(72) Inventeur: ROBERT, Michel, F-63040 CLERMONT-FERRAND Cedex 9 (FR); SINNET, Jay Clifford, Greenville, South Carolina 29605 (US)
(74) Mandataire: Dequire, Philippe Jean-Marie Denis
(86) Numéro de dépôt international: PCT/FR2011/051900
(87) Numéro de publication internationale: WO 2012/020203

(56) Documents cités:
- EP-A1- 1 454 770
- JP-A- 4 179 003
- US-A1- 2003 221 766
- US-A1- 2004 032 377

## Description

L'invention concerne le domaine des dispositifs électroniques pour pneumatique.

On connaît de l'état de la technique un dispositif électronique comprenant deux antennes reliées à une organe électronique, par exemple une puce, monté sur une platine. Chaque antenne présente une forme sensiblement hélicoïdale. Chaque antenne comprend une âme en acier revêtue directement d'un revêtement en laiton qui est un alliage de cuivre et de zinc dont les proportions sont respectivement de l'ordre de 75% et 25%. On pourra également se référer aux documents suivants de l'état de la technique, qui présentent des antennes et/ou des procédés de fabrication d'une antenne: JP 4 179003 ; US 2004/032377 ; EP 1454770 ; US 2003/221766.

On sait que la conduction électromagnétique pour une telle antenne s'effectue principalement par un effet de peau, c'est-à-dire qu'elle est principalement assurée dans une partie radialement externe de l'antenne. La conduction électromagnétique s'effectue sur une épaisseur, appelée épaisseur de peau, et est notamment fonction de la fréquence du rayonnement et du matériau constitutif de la couche de conduction. A titre d'exemple, pour une fréquence UHF (à titre d'exemple 915 MHz), l'épaisseur de peau est de 2,1 µm pour l'argent, de 2,2 µm pour le cuivre, de 4,4 µm pour le laiton.

Afin de fabriquer l'antenne, on met en forme une âme filiforme nue déroulée à partir d'une bobine de stockage en la déformant plastiquement pour lui donner une forme hélicoïdale. Puis, on découpe l'âme hélicoïdale en tronçons et on revêt l'âme hélicoïdale nue du revêtement en laiton. L'étape de revêtement est effectuée dans un bain électrolytique.

Comme rappelé ci-dessus, pour un fonctionnement optimum d'une antenne revêtue de laiton aux fréquences UHF, l'épaisseur de la couche de revêtement ne doit pas être inférieure à 4 micromètres. En outre, de part sa géométrie hélicoïdale, les conditions de revêtement sur l'âme sont très difficiles à contrôler, notamment à l'intérieur de chaque spire. D'autre part, comme il s'agit d'un alliage, sa composition exacte est difficile à maîtriser et nécessite une régulation précise des paramètres du procédé de dépôt (intensités, temps de passage dans le bain, composition du bain). En synthèse, la qualité du dépôt associée aux épaisseurs nécessaires entraîne une durée de réalisation relativement longue avec une conséquence majeure sur le coût de l'antenne.

L'invention a pour but de fournir un procédé industriellement robuste et à plus faible coût permettant d'obtenir une antenne présentant des caractéristiques optimales.

A cet effet, l'invention a pour objet un procédé de fabrication d'une antenne comprenant une âme, l'antenne étant destinée à être intégrée dans une masse de gomme d'un pneumatique, procédé dans lequel :
- on revêt l'âme sous forme filiforme d'un revêtement dans un matériau distinct du matériau de l'âme,
- postérieurement à l'étape de revêtement, on déforme plastiquement au moins une portion de l'âme revêtue.

En revêtant l'âme avant sa déformation plastique, c'est-à-dire lorsque l'âme présente encore une forme filiforme, l'efficacité de l'étape de revêtement est améliorée. En effet, l'âme étant filiforme, le revêtement peut recouvrir uniformément et de façon homogène l'âme nue. Ainsi, l'étape de revêtement est relativement rapide, ce qui permet de limiter l'épaisseur de chaque couche et de diminuer les coûts énergétiques de l'étape de revêtement tout en améliorant la qualité du revêtement. L'antenne ainsi obtenue est donc fonctionnelle.

En outre, le procédé est continu, c'est-à-dire que l'étape de revêtement permet de recouvrir une grande longueur d'âme filiforme qui sera ensuite tronçonnée. Le procédé selon l'invention permet ainsi de réduire les interventions manuelles et donc les coûts.

Un métal sensiblement pur est un métal comprenant ledit métal dans une proportion supérieure à 95%, les au plus 5% restants ne constituants que des impuretés liés au procédé de fabrication du métal.

On notera qu'un alliage de métaux comprend généralement au moins deux métaux distincts majoritaires, c'est-à-dire constituant à eux deux plus de 50 % en masse de l'alliage, et des additifs apportant des propriétés spécifiques à l'alliage en fonction de son utilisation.

Selon des caractéristiques optionnelles du procédé:
- L'âme est constituée d'acier.
- On déforme plastiquement la portion de l'âme revêtue pour lui donner une forme hélicoïdale. L'antenne est destinée à être intégrée dans une masse de gomme d'un pneumatique. Lors du fonctionnement du pneumatique, ce dernier est soumis à des contraintes et déformations qui sont transmises à l'antenne. La forme hélicoïdale permet d'améliorer l'endurance de l'antenne vis-à-vis des contraintes subies par l'antenne. En effet, la forme hélicoïdale confère à l'antenne une souplesse lui permettant de se déformer sans risque de casser ce qui pourrait endommager le pneumatique. En particulier, la forme hélicoïdale lui confère de l'élasticité dans la direction parallèle à l'axe de l'hélice.
- On revêt l'âme d'une couche de conduction d'un signal électromagnétique. La couche de conduction permet de conduire, par effet de peau, un signal électromagnétique entre l'antenne et l'organe électronique qui y est connecté.

- La couche de conduction est constituée d'un métal sensiblement pur, par exemple du cuivre. L'efficacité de l'étape de revêtement est maximale lorsqu'on utilise un métal sensiblement pur. En outre, le cuivre est un excellent conducteur ce qui permet d'améliorer les performances de conduction de l'antenne. De plus, le fait de revêtir l'âme d'un revêtement constitué d'un métal sensiblement pur, tel du cuivre, permet d'accélérer très sensiblement, pratiquement jusqu'à un facteur qui peut atteindre 10, la vitesse de fabrication de l'antenne relativement à un procédé utilisant un revêtement en un alliage tel le laiton.
- On revêt directement l'âme par la couche de conduction. En variante, on pourra revêtir l'âme nue par une ou plusieurs couches intermédiaires interposées entre l'âme nue et la couche de conduction. Dans une autre variante, on pourra revêtir l'âme nue par plusieurs couches de conduction, chaque couche de conduction étant constituée d'un métal sensiblement pur, par exemple du cuivre. Dans cette autre variante, une des couches de conduction peut directement revêtir l'âme ou bien revêtir une couche intermédiaire interposée entre l'âme nue et cette couche de conduction.
- On revêt l'âme d'une couche d'isolation chimique destinée à isoler chimiquement la gomme de ce que revêt la couche d'isolation chimique. La couche de conduction peut contenir un ou plusieurs matériaux incompatibles avec la gomme du pneumatique ou bien pouvant réagir avec cette gomme. Cela entraînerait à la fois la détérioration de la couche de conduction et de la gomme environnante de l'antenne. Cette couche d'isolation chimique est inerte chimiquement du point de vue de la gomme. La couche d'isolation chimique permet ainsi d'empêcher les réactions chimiques entre la couche de conduction et la gomme environnante. En particulier, lorsque la couche de conduction est constituée de cuivre, la couche d'isolation chimique permet d'empêcher la sulfuration du cuivre. En d'autres termes, la couche d'isolation chimique a une fonction de protection de la gomme et de la couche qu'elle revêt. Ainsi, l'utilisation de couches ayant deux fonctions dissociées, une fonction de conduction et une fonction d'isolation chimique, permet de d'optimiser l'épaisseur nécessaire de chaque couche et donc les coûts associés au revêtement de l'âme.
- La couche d'isolation chimique est constituée d'un métal sensiblement pur ou d'un alliage de métaux, par exemple choisi parmi le zinc, le nickel, l'étain ou le laiton. L'efficacité de l'étape de revêtement est maximale lorsqu'on utilise un métal sensiblement pur. En outre, ces métaux ou le laiton sont inertes chimiquement vis-à-vis de la gomme et permettent une bonne adhérence de la couche d'isolation chimique sur la couche de conduction. En outre, ils permettent, dans le cas du zinc ou du nickel, une bonne adhérence de la couche d'isolation chimique avec la gomme. De plus, ces métaux ou le laiton permettent de connecter facilement l'antenne avec l'organe électronique, par exemple une puce, grâce à leurs propriétés de brasabilité.
- On revêt directement la couche de conduction par la couche d'isolation chimique. En variante, on pourra revêtir la couche de conduction par une ou plusieurs couches intermédiaires interposées entre la couche de conduction et la couche d'isolation chimique. Dans une autre variante, on pourra revêtir la couche de conduction par plusieurs couches d'isolation chimique, chaque couche d'isolation chimique étant constituée d'un métal sensiblement pur ou d'un alliage de métaux, par exemple choisi parmi le zinc, le nickel, l'étain ou le laiton. Dans cette autre variante, une des couches d'isolation chimique peut directement revêtir la couche de conduction ou bien revêtir une couche intermédiaire interposée entre la couche de conduction et cette couche d'isolation chimique.
- Dans un mode de réalisation, on revêt l'âme par une couche de conduction d'un signal électromagnétique et d'isolation chimique destinée à isoler chimiquement la gomme de ce que revêt la couche d'isolation chimique, la couche de conduction et d'isolation chimique étant constituée d'un alliage de métaux, de préférence du laiton.
- On revêt directement l'âme par la couche de conduction et d'isolation chimique. En variante, on pourra revêtir l'âme par une ou plusieurs couches intermédiaires interposées entre l'âme et la couche de conduction et d'isolation chimique. Dans une autre variante, on pourra revêtir l'âme nue par plusieurs couches de conduction et d'isolation chimique, chaque couche de conduction et d'isolation chimique étant constituée d'un alliage de métaux, de préférence du laiton. Dans cette autre variante, une des couches de conduction et d'isolation chimique peut directement revêtir l'âme ou bien revêtir une couche intermédiaire interposée entre l'âme nue et cette couche de conduction et d'isolation chimique.
- On revêt la couche d'isolation chimique ou la couche de conduction et d'isolation chimique par une couche externe d'adhésion de l'antenne à la gomme. La couche d'adhésion permet de faciliter la fabrication du pneumatique. En effet, lors de la pose de l'antenne sur le mélange, la couche d'adhésion permet de maintenir l'antenne sur le mélange sans que celle-ci ne risque de bouger.
- Dans un mode de réalisation, la couche externe d'adhésion est constituée d'au moins un métal sensiblement pur ou d'un alliage de métaux, par exemple choisi parmi le zinc, le nickel ou le laiton. Ces métaux permettent à l'antenne d'adhérer à la gomme environnante.
- Dans un autre mode de réalisation, la couche externe d'adhésion comprend un adhésif non métallique.
- De préférence, on revêt directement la couche d'isolation chimique ou la couche de conduction et d'isolation chimique par la couche d'adhésion. En variante, on pourra revêtir la couche d'isolation chimique ou la couche de conduction et d'isolation chimique par une ou plusieurs couches intermédiaires interposées entre la couche d'isolation chimique ou la couche de conduction et d'isolation chimique et la couche d'adhésion. Dans une autre variante, on pourra revêtir la couche d'isolation chimique ou la couche de conduction et d'isolation chimique par plusieurs couches d'adhésion, chaque couche d'adhésion étant constituée d'au moins un métal sensiblement pur ou d'un alliage de métaux, par exemple choisi parmi le zinc, le nickel, le laiton ou comprenant un adhésif non métallique. Dans cette autre variante, une des couches d'adhésion peut directement revêtir la couche d'isolation chimique ou la couche de conduction et d'isolation chimique ou bien revêtir une couche intermédiaire interposée entre la couche d'isolation chimique ou la couche de conduction et d'isolation chimique et cette couche d'adhésion.
- Avantageusement, postérieurement à l'étape ou aux étapes de revêtement, on traite thermiquement l'antenne par chauffage. On favorise ainsi la migration du métal de la couche de conduction vers la couche d'isolation chimique. Dans le cas où la couche de conduction est constituée d'un premier métal sensiblement pur et où la couche d'isolation chimique est constituée d'un deuxième métal sensiblement pur, la migration du premier métal vers la deuxième couche provoque la formation d'un alliage en surface. Ainsi, sans avoir eu recours à une étape de revêtement d'un alliage et donc sans avoir eu les inconvénients liés au revêtement d'un alliage, on obtient une antenne dont l'âme est protégée par un alliage. On obtient donc la formation de laiton en surface dans le cas où les premier et deuxième métaux sont respectivement le cuivre et le zinc. En outre, cette étape de traitement thermique permet de libérer les contraintes accumulées dans l'antenne lors de l'étape de déformation plastique.

L'invention sera mieux comprise à la lecture de la description qui va suivre, donnée uniquement à titre d'exemple non limitatif et faite en se référant aux dessins dans lesquels :
- la figure 1 est une vue en perspective d'un dispositif électronique comprenant une antenne fabriquée selon un procédé selon un premier mode de réalisation de l'invention;
- la figure 2 est une vue de détails de l'antenne de la figure 1 ;
- les figures 3 à 6 sont des vues en perspective avec une coupe de l'antenne de la figure 2 au cours de différentes étapes du procédé de fabrication selon le premier mode de réalisation de l'invention;

- la figure 7 est une vue similaire à celle de la figure 1 au cours d'une étape de procédé succédant à celle des figures 3 à 6;
- la figure 8 est un schéma illustrant différentes étapes du procédé selon le premier mode de réalisation de l'invention;
- la figure 9 est une vue similaire à celle de la figure 2 montrant un second mode de réalisation d'une antenne selon l'invention ;
- les figures 10 et 11 sont des vues analogues des figures 4 à 6 d'une antenne fabriquée par un procédé selon le second mode de réalisation.

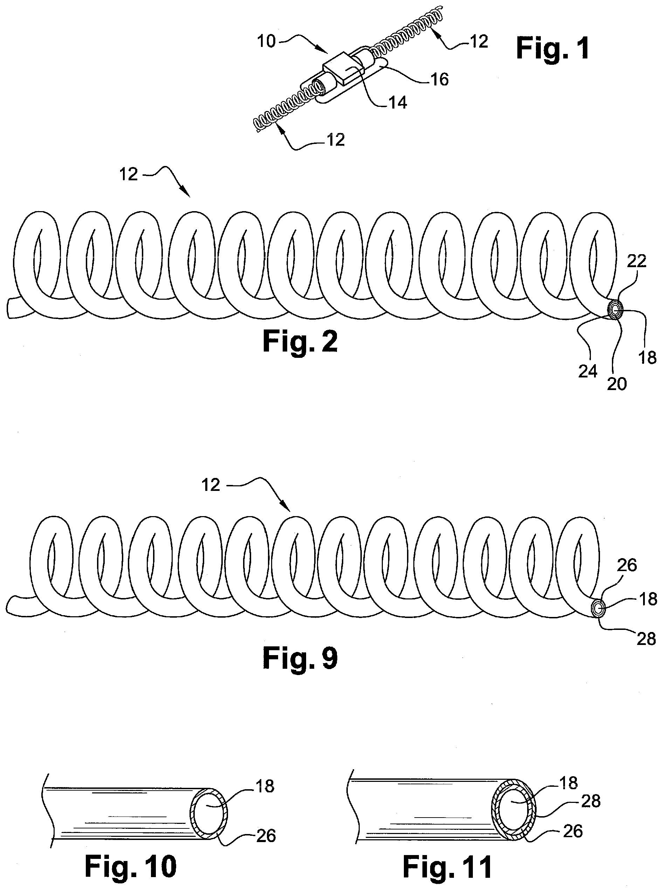

On a représenté sur la figure 1 un dispositif électronique désigné par la référence générale 10 et destiné à être enrobé dans une masse de gomme. Dans l'exemple représenté, le dispositif électronique 10 est de type RFID et comprend deux antennes 12 connectées à un organe électronique 14, ici une puce, monté sur une platine 16. Dans ce qui suit, les deux antennes 12 étant identiques, on décrira une seule antenne 12 en référence à la figure 2. Les deux antennes 12 constituent une antenne dipôle.

L'antenne 12 présente une forme sensiblement hélicoïdale filiforme et présente une longueur, un diamètre extérieur et un pas d'hélice définis en fonction des conditions d'utilisation du dispositif électronique. A titre d'exemple, le pas de l'hélice peut être de 13 tours par centimètre, le diamètre extérieur de 1,2 mm et la longueur de l'ordre de 25 mm. Cette combinaison de caractéristiques est particulièrement utile dans le cas d'un fonctionnement du dispositif électronique dans un pneumatique aux fréquences UHF.

L'antenne 12 comprend une âme 18 en acier présentant un diamètre externe de 0.2 mm. L'antenne 12 comprend également une première couche 20 de conduction d'un signal électromagnétique revêtant directement l'âme 18. La couche 20 de conduction est constituée d'un métal sensiblement pur, en l'espèce de cuivre métallique (choisi pour ses caractéristiques électriques et son coût) et est au contact de l'âme 18. La couche 20 présente une épaisseur supérieure à 2 micromètres, de préférence comprise entre 4 et 5 micromètres.

L'antenne 12 comprend également une deuxième couche 22 d'isolation chimique destinée à isoler chimiquement la gomme de la couche de conduction 20. La couche 22 revêt directement la première couche 20. La couche 22 est constituée d'un métal sensiblement pur, en l'espèce du zinc métallique et est au contact de la première couche 20. La couche 22 présente une épaisseur supérieure à 0,2 micromètre, de préférence comprise entre 0,4 et 0,6 micromètre.

En variante, la couche 22 est constituée de nickel ou d'étain.

Dans une autre variante, la couche 22 est constituée d'un alliage de métaux, par exemple du laiton.

Dans d'autres variantes, l'antenne 12 comprend plusieurs couches 22 d'isolation chimique, chaque couche étant constituée d'un métal sensiblement pur différent ou d'un alliage de métaux.

L'antenne 12 comprend également une troisième couche 24 d'adhésion de l'antenne à la gomme revêtant directement la deuxième couche 22. La couche 24 comprend un adhésif non métallique, en l'espèce un adhésif commercialisé sous les marques « Chemlok » ou « Chemosil » par la société LORD CORPORATION et est au contact de la deuxième couche 22.

En variante, la troisième couche est constituée d'un métal sensiblement pur ou d'un alliage de métaux, par exemple choisi parmi le zinc, le nickel ou le laiton.

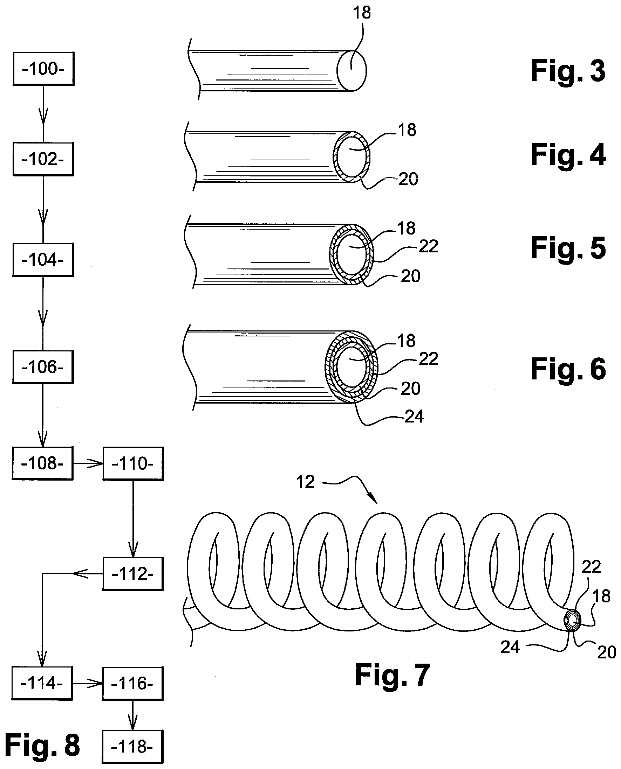

En référence aux figures 3 à 8, on va maintenant décrire les différentes étapes du procédé de fabrication selon le premier mode de réalisation de l'antenne 12.

On dispose d'une bobine sur laquelle est enroulé un fil métallique filiforme comprenant l'âme 18. Cette âme 18 filiforme nue est représentée sur la figure 3.

Lors d'une première étape 100 de nettoyage, on fait passer l'âme 18 dans un bain alcalin.

Lors d'une étape 102, on revêt directement l'âme 18 de la première couche 20 de conduction par dépôt électrolytique en continu. On fait passer le fil dans un bain de type adapté au métal déposé : un bain de cyanure pour un dépôt de cuivre, un bain alcalin pour un dépôt de zinc ou un bain acide pour un dépôt d'étain. On obtient l'âme 18 revêtue de la couche 20 représentée sur la figure 4.

Puis, au cours d'une étape 104, on revêt directement la première couche 20 de la deuxième couche 22 d'isolation chimique, toujours par passage dans un bain électrolytique de composition appropriée au matériau de la couche d'isolation chimique. On obtient l'âme 18 revêtue des couches 20, 22 représentée sur la figure 5.

Ensuite, lors d'une étape 106, on revêt directement la deuxième couche 22 de la troisième couche 24 d'adhésion. On obtient l'âme revêtue des couches 20, 22, 24 représentée à la figure 6. Dans la variante dans laquelle la troisième couche est constituée d'un métal sensiblement pur ou d'un alliage de métaux, on dépose la troisième couche par un procédé dit « flash » ce qui correspond à un procédé d'électro-déposition relativement court permettant d'obtenir une troisième couche présentant une épaisseur inférieure à 0,1 micromètre. Un tel procédé « flash » utilise une densité de courant élevée ainsi qu'un bain à faible concentration ionique.

Puis, lors d'une étape 108, on nettoie (élimination des résidus du bain de dépôt, rinçage) et on sèche l'âme 18 revêtue des couches 20, 22 et 24 par passage dans un flux d'air propre et chaud.

Dans une étape 110, on contrôle la composition de chaque couche 20, 22, 24, par exemple par spectrométrie de fluorescence X ou par polarographie. On contrôle également l'épaisseur de chaque couche 20, 22, 24, par exemple par microscope à balayage électronique, polarographie, spectrométrie d'émission optique (ICP-AES étant le sigle anglais pour Inductive Coupled Plasma Absorption Emission Spectroscopy). On contrôle également l'aspect de surface de l'antenne 12 afin de vérifier l'uniformité du dépôt. Un test de caractérisation du potentiel d'endurance mécanique de l'âme et de l'adhérence des couches de revêtements peut également être pratiqué.

Ensuite, au cours d'une étape 112, on déforme plastiquement l'âme filiforme revêtue pour lui donner sa forme hélicoïdale au moyen d'un tour à enrouler les ressorts. En l'espèce, l'âme revêtue des couches 20, 22 et 24 est déformée plastiquement en continu et sur toute sa longueur. On obtient alors l'âme revêtue des couches 20, 22 et 24 représentée sur la figure 7.

En variante, on déforme plastiquement uniquement une portion de l'âme revêtue des couches 20, 22 et 24 de façon périodique le long de l'âme revêtue des couches 20, 22 et 24.

Puis, lors d'une étape 114, on coupe l'âme 18 hélicoïdale revêtue en tronçons 24 de longueur prédéterminée, ici de l'ordre de 20 à 30 millimètres.

Puis, lors d'une étape 116, on traite thermiquement l'antenne 12 par chauffage à une température d'au moins 200°C pendant 30 minutes pour obtenir une relaxation des contraintes mécaniques. On obtient alors l'antenne hélicoïdale 12 représentée sur la figure 2.

Enfin, lors d'une étape 118, on connecte l'antenne 12 à une borne de l'organe électronique 14 et à la platine 16 pour obtenir le dispositif 10 représenté sur la figure 1.

On a illustré sur les figures 9 à 11 une antenne et un procédé selon un deuxième mode de réalisation de l'invention. Les éléments analogues à ceux de l'antenne et du procédé du premier mode de réalisation sont désignés par des références identiques.

A la différence du premier mode de réalisation, l'antenne 12 comprend une couche 26 de conduction et d'isolation chimique constituée d'un alliage de métaux. En l'espèce, l'alliage est du laiton. La couche 26 revêt directement l'âme 18 de l'antenne. L'antenne 12 comprend également une couche d'adhésion 28 analogue à celle de l'antenne 12 selon le premier mode de réalisation.

En référence aux figures 10 à 11, on va maintenant décrire les différentes étapes du procédé de fabrication selon le deuxième mode de réalisation.

Le procédé selon le second mode de réalisation diffère du procédé selon le premier mode de par les étapes 102 et 104. En effet, à la suite de l'étape 100 de nettoyage, on revêt directement l'âme 18 de la couche 26 de conduction et d'isolation chimique en laiton. On obtient alors l'âme 18 revêtue de la couche 26 représentée sur la figure 10.

Puis, on revêt directement la couche 26 de la couche 28 d'adhésion. On obtient alors l'âme revêtue des couches 26 et 28 représentée sur la figure 11.

L'invention ne se limite pas au mode de réalisation précédemment décrit.

En effet, on pourra déformer en totalité l'âme revêtue ou bien seulement une portion. En outre, on pourra déformer plastiquement plusieurs portions de l'âme revêtue de façons différentes.

Les étapes de revêtements utilisant des métaux ou alliages sont généralement mises en oeuvre dans des bains électrolytiques. En variante, elles pourront être mises en oeuvre par d'autres techniques connues.

## Revendications

1. Procédé de fabrication d'une antenne (12) comprenant une âme (18), l'antenne étant destinée à être intégrée dans une masse de gomme notamment d'un pneumatique, dans lequel on réalise une étape de déformation plastique d'au moins une portion de l'âme (18), **caractérisé en ce que**:
- on revêt l'âme sous forme filiforme (18) d'un revêtement (20, 22, 24; 26, 28) dans un matériau distinct du matériau de l'âme (18),
- postérieurement à l'étape de revêtement, on déforme plastiquement au moins une portion de l'âme (18) revêtue, pour réaliser l'étape de déformation plastique précitée.

2. Procédé selon la revendication 1, dans lequel l'âme est constituée d'acier.

3. Procédé selon l'une quelconque des revendications précédentes, dans lequel on déforme plastiquement la portion de l'âme revêtue (12) pour lui donner une forme hélicoïdale.

4. Procédé selon l'une quelconque des revendications précédentes, dans lequel on revêt l'âme (18) d'une couche (20) de conduction d'un signal électromagnétique.

5. Procédé selon la revendication précédente, dans lequel la couche (20) de conduction est constituée d'un métal sensiblement pur, par exemple du cuivre.

6. Procédé selon la revendication 4 ou 5, dans lequel on revêt directement l'âme (18) par la couche (20) de conduction.

7. Procédé selon l'une quelconque des revendications précédentes, dans lequel on revêt l'âme (18) d'une couche (22) d'isolation chimique destinée à isoler chimiquement la gomme de ce que revêt la couche (22) d'isolation chimique.

8. Procédé selon la revendication 7 prise en combinaison avec l'une quelconque des revendications 4 à 6, dans lequel on revêt directement la couche (20) de conduction par la couche (22) d'isolation chimique.

9. Procédé selon la revendication 7 ou 8, dans lequel la couche (22) d'isolation chimique est constituée d'un métal sensiblement pur ou d'un alliage de métaux, par exemple choisi parmi le zinc, le nickel, l'étain ou le laiton.

10. Procédé selon la revendication 9, dans lequel la couche (22) d'isolation chimique est constituée d'un métal sensiblement pur choisi parmi le zinc, le nickel, et l'étain, par exemple le nickel.

11. Procédé selon l'une quelconque des revendications 1 à 3, dans lequel on revêt l'âme (18) par une couche (26) de conduction d'un signal électromagnétique et d'isolation chimique, la couche (26) de conduction et d'isolation chimique étant constituée d'un alliage de métaux, de préférence du laiton.

12. Procédé selon la revendication 11, dans lequel on revêt directement l'âme (18) par la couche (26) de conduction et d'isolation chimique.

13. Procédé selon l'une quelconque des revendications 7 à 12, dans lequel, on revêt la couche (22) d'isolation chimique ou la couche (26) de conduction et d'isolation chimique par une couche externe (24) d'adhésion de l'antenne (12) à la gomme.

14. Procédé selon la revendication 13, dans laquelle la couche externe (24) d'adhésion est constituée d'au moins un métal sensiblement pur ou d'un alliage de métaux, par exemple choisi parmi le zinc, le nickel ou le laiton.

15. Procédé selon la revendication 13, dans laquelle la couche externe (24) d'adhésion comprend un adhésif non métallique.

16. Procédé selon l'une quelconque des revendications 7 à 15, dans lequel on revêt directement la couche (22) d'isolation chimique ou la couche (26) de conduction et d'isolation chimique par la couche (24) d'adhésion.

17. Procédé selon l'une quelconque des revendications précédentes, dans lequel, postérieurement à l'étape ou aux étapes de revêtement, on traite thermiquement l'antenne par chauffage (12).

## Patentansprüche

1. Verfahren zur Herstellung einer Antenne (12), umfassend einen Leiter (18), wobei die Antenne dazu bestimmt ist, in eine Gummimasse, insbesondere eines Reifens, integriert zu sein, bei dem ein Schritt der plastischen Verformung mindestens eines Abschnitts des Leiters (18) durchgeführt wird, **dadurch gekennzeichnet, dass**:
- der Leiter fadenförmig (18) mit einer Verkleidung (20, 22, 24; 26, 28) aus einem anderen Material als das Material des Leiters (18) überzogen wird,
- nach dem Schritt des Überziehens mindestens ein Abschnitt des überzogenen Leiters (18) plastisch verformt wird, um den vorgenannten Schritt der plastischen Verformung durchzuführen.

2. Verfahren nach Anspruch 1, bei dem der Leiter aus Stahl besteht.

3. Verfahren nach einem der vorhergehenden Ansprüche, bei dem der Abschnitt des überzogenen Leiters (12) plastisch verformt wird, um ihm eine spiralförmige Form zu verleihen.

4. Verfahren nach einem der vorhergehenden Ansprüche, bei dem der Leiter (18) mit einer Schicht (20) zum Leiten eines elektromagnetischen Signals überzogen wird.

5. Verfahren nach dem vorhergehenden Anspruch, bei dem die leitende Schicht (20) aus einem im Wesentlichen reinen Metall, beispielsweise Kupfer, besteht.

6. Verfahren nach Anspruch 4 oder 5, bei dem der Leiter (18) direkt mit der leitenden Schicht (20) überzogen wird.

7. Verfahren nach einem der vorhergehenden Ansprüche, bei dem der Leiter (18) mit einer chemisch isolierenden Schicht (22) überzogen wird, die dazu bestimmt ist, den Gummi chemisch von dem, der die chemisch isolierende Schicht (22) überzieht, zu isolieren.

8. Verfahren nach Anspruch 7 in Kombination mit einem der Ansprüche 4 bis 6, bei dem die leitende Schicht (20) direkt mit der chemisch isolierenden Schicht (22) überzogen wird.

9. Verfahren nach Anspruch 7 oder 8, bei dem die chemisch isolierende Schicht (22) aus einem im Wesentlichen reinen Metall oder einer Metalllegierung, beispielsweise ausgewählt aus Zink, Nickel, Zinn oder Messing, besteht.

10. Verfahren nach Anspruch 9, bei dem die chemisch isolierende Schicht (22) aus einem im Wesentlichen reinen Metall, ausgewählt aus Zink, Nickel und Zinn, beispielsweise aus Nickel, besteht.

11. Verfahren nach einem der Ansprüche 1 bis 3, bei dem der Leiter (18) mit einer Schicht (26) zum Leiten eines elektromagnetischen Signals und zur chemischen Isolierung überzogen wird, wobei die leitende und chemisch isolierende Schicht (26) aus einer Metalllegierung, vorzugsweise Messing, besteht.

12. Verfahren nach Anspruch 11, bei dem der Leiter (18) direkt mit der leitenden und chemisch isolierenden Schicht (26) überzogen wird.

13. Verfahren nach einem der Ansprüche 7 bis 12, bei dem die chemisch isolierende Schicht (22) oder die leitende und chemisch isolierende Schicht (26) mit einer äußeren Schicht (24) zur Haftung der Antenne (12) am Gummi überzogen wird.

14. Verfahren nach Anspruch 13, bei dem die äußere Haftschicht (24) aus mindestens einem im Wesentlichen reinen Metall oder einer Metalllegierung, beispielsweise ausgewählt aus Zink, Nickel oder Messing, besteht.

15. Verfahren nach Anspruch 13, bei dem die äußere Haftschicht (24) ein nicht metallisches Haftmittel umfasst.

16. Verfahren nach einem der Ansprüche 7 bis 15, bei dem die chemisch isolierende Schicht (22) oder die leitende und chemisch isolierende Schicht (26) direkt mit der Haftschicht (24) überzogen wird.

17. Verfahren nach einem der vorhergehenden Ansprüche, bei dem nach dem Schritt oder den Schritten des Überziehens die Antenne durch Erhitzen (12) wärmebehandelt wird.

## Claims

1. Process for manufacturing an antenna (12) comprising a core (18), the antenna being intended to be integrated into a rubber compound especially that of a tyre, comprising a step of plastically deformation of at least one portion of the core, **characterized in that**:
- the core (18) of filiform shape is coated with a coating (20, 22, 24; 26, 28) of a material different from the material of the core (18); and
- after the coating step, at least one portion of the coated core (18) is plastically deformed, to achieve the said step of plastically deformation.

2. Process according to Claim 1, in which the core is made of steel.

3. Process according to either of the preceding claims, in which the portion of the coated core (18) is plastically deformed so as to give it a helicoidal shape.

4. Process according to any one of the preceding claims, in which the core (18) is coated with an electromagnetic-signal conduction layer (20).

5. Process according to the preceding claim, in which the conduction layer (20) is made up of a substantially pure metal such as, for example, copper.

6. Process according to Claim 4 or 5, in which the core (18) is coated directly with the conduction layer (20).

7. Process according to any one of the preceding claims, in which the core (18) is coated with a chemical isolation layer (22) intended for chemically isolating the rubber from what the chemical isolation layer (22) coats.

8. Process according to Claim 7 taken in combination with any one of Claims 4 to 6, in which the conduction layer (20) is coated directly with the chemical isolation layer (22).

9. Process according to Claim 7 or 8, in which the chemical isolation layer (22) is made of a substantially pure metal or an alloy of metals, for example chosen from zinc, nickel, tin and brass.

10. Process according to Claim 9, in which the chemical isolation layer (22) is made of a substantially pure metal chosen from zinc, nickel and tin, for example nickel.

11. Process according to any one of Claims 1 to 3, in which the core (18) is coated with an electromagnetic-signal conduction/chemical isolation layer (26), the conduction/chemical isolation layer (26) consisting of an alloy of metals, preferably brass.

12. Process according to Claim 11, in which the core (18) is coated directly with the conduction/chemical isolation layer (26).

13. Process according to any one of claims 7 to 12, in which the chemical isolation layer (22) or the conduction/chemical isolation layer (26) is coated with an external adhesion layer (24) for adhesion of the antenna (12) to the rubber.

14. Process according to Claim 13, in which the external adhesion layer (24) is made of at least one substantially pure metal or an alloy of metals, for example chosen from zinc, nickel or brass.

15. Process according to Claim 13, in which the external adhesion layer (24) comprises a non-metallic adhesive.

16. Process according to any one of Claims 7 to 15, in which the chemical isolation layer (22) or the conduction/chemical isolation layer (26) is coated directly with the adhesion layer (24).

17. Process according to any one of the preceding claims, in which the antenna (12) undergoes a heat treatment, after the coating step or steps, by heating it.
